# EUROPÄISCHE PATENTSCHRIFT

(11) **EP 2 345 816 B1**
(45) Veröffentlichungstag und Bekanntmachung des Hinweises auf die Patenterteilung: **30.08.2017**
(21) Anmeldenummer: 10016076.1
(22) Anmeldetag: 24.12.2010
(51) Int. Cl.: F15B 21/04

(54) **Entlüftungsvorrichtung für einen Hydraulikzylinder**
Venting device for a hydraulic cylinder
Dispositif d'aération pour un cylindre hydraulique

(30) Priorität: 13.01.2010 DE 102010004618
(43) Veröffentlichungstag der Anmeldung: 20.07.2011
(73) Patentinhaber: Audi AG, 85045 Ingolstadt (DE)
(72) Erfinder: Schuller, Dietmar, 93336 Altmannstein (DE); Fleischmann, Hans-Peter, 85134 Stammham (DE); Jakob-Bodenhagen, Mathias, 85080 Gaimersheim (DE)
(74) Vertreter: Lehle, Josef

(56) Entgegenhaltungen:
- EP-A1- 2 006 587
- WO-A2-2008/039778
- JP-A- 2004 293 661

## Beschreibung

Die Erfindung betrifft eine Entlüftungseinrichtung für einen Hydraulikzylinder, insbesondere eines Doppelkupplungsgetriebes, gemäß Oberbegriff des Anspruchs 1.

Entlüftungseinrichtungen der hier angesprochenen Art werden in Zusammenhang mit hydraulischen Aktuatorräumen, insbesondere Hydraulikzylindern, eingesetzt, um den hydraulischen Betätigungskreis zum Tank des Hydraulikmediums hin entlüften zu können. Hierdurch soll bei Betätigung des Aktuators eine stabile hydraulische Strecke zur Verfügung gestellt werden. Die genannten Entlüftungseinrichtungen werden insbesondere bei Doppelkupplungsgetrieben, ganz besonders bei Kupplungszylindern von Doppelkupplungsgetrieben, eingesetzt. Solche Kupplungszylinder dienen dem Ein- beziehungsweise Ausrücken der Kupplungen eines Doppelkupplungsgetriebes. Bevorzugt können die genannten Entlüftungseinrichtungen auch in Zusammenhang mit den Gangstellerzylindern eines Doppelkupplungsgetriebes eingesetzt werden. Bekannte Entlüftungseinrichtungen weisen einen einen Einlass und einen Auslass aufweisenden, die Entlüftungseinrichtung durchsetzenden Strömungskanal auf. Es ist ein Verschließelement vorgesehen, das typischerweise durch die Schwerkraft in eine erste Funktionsstellung gedrängt wird, in der der Auslass freigegeben ist. Zugleich ist das Verschließelement durch vorbeiströmendes Medium mitreißbar und in eine zweite Funktionsstellung drängbar, in welcher es den Auslass verschließt. Wird ein der Entlüftungseinrichtung zugeordneter Hydraulikzylinder entlüftet, strömt die Luft beziehungsweise das ausgetriebene gasförmige Medium durch den Einlass in die Entlüftungseinrichtung ein, an dem Verschließelement vorbei und durch den Auslass aus der Entlüftungseinrichtung aus. Die Viskosität des gasförmigen Mediums reicht dabei nicht aus, das Verschließelement mitzureißen und dichtend gegen den Auslass zu drängen. Sobald der Entlüftungsvorgang abgeschlossen ist, strömt Hydraulikmedium in den Einlass der Entlüftungseinrichtung ein und von dort zum Auslass. Das Hydraulikmedium weist eine deutlich höhere Viskosität auf als das bei der Entlüftung ausgetriebene Medium, wodurch es das Verschließelement mitreißen kann, wenn es dieses umströmt. Das Verschließelement wird dadurch gegen den Auslass gedrängt, und verschließt diesen dichtend. Eine weitere Erhöhung des Hydraulikdrucks drängt das Verschließelement mit größerer Kraft gegen den Auslass, sodass sich die Dichtwirkung mit steigendem Druck erhöht. Es kann also kein Hydraulikmedium durch den Auslass ausströmen, während der Hydraulikzylinder mit Druck beaufschlagt wird.

Nachteilig an bekannten Entlüftungseinrichtungen ist, dass in drucklosem Zustand des Hydraulikzylinders, also in der ersten Funktionsstellung des Verschließelements, sowohl der Einlass als auch der Auslass freigegeben sind. Sollten also kleinere Mengen Hydraulikmedium ihren Weg zur Entlüftungseinrichtung finden, können diese durch den freigegebenen Strömungskanal entweichen. Außerdem weist das umströmte Verschließelement eine gewisse Trägheit auf, sodass Hydraulikmedium durch den Auslass entweichen kann, bevor das Verschließelement sicher in seine zweite Funktionsstellung gedrängt wird.

Aus dem Stand der Technik ist die Druckschrift WO 2008/039778 A2 bekannt. Diese beschreibt ein Abstellventil, welches dazu dient, eine Haushaltswasserleitung zu unterbrechen, sobald ein Leck festgestellt wird. Aus dem Stand der Technik sind weiterhin die Druckschriften EP 2 006 587 A1 sowie JP 2004-293661 bekannt.

Aufgabe der Erfindung ist es, eine Entlüftungseinrichtung für einen Hydraulikzylinder, insbesondere eines Doppelkupplungsgetriebes, zu schaffen, der die genannten Nachteile nicht aufweist. Die Aufgabe wird gelöst durch eine Entlüftungseinrichtung mit den Merkmalen des Anspruchs 1. Diese umfasst einen sie durchsetzenden Strömungskanal, der einen Einlass und einen Auslass aufweist. Sie weist außerdem ein den Auslass in wenigstens einer ersten Funktionsstellung freigebendes und in einer zweiten Funktionsstellung verschließendes Verschließelement auf. Die Entlüftungseinrichtung zeichnet sich dadurch aus, dass das Verschließelement in seiner ersten Funktionsstellung so angeordnet ist, dass es den Einlass verschließt. Hierdurch kann Hydraulikmedium, welches in drucklosem Zustand seinen Weg zur Entlüftungseinrichtung findet, nicht in den Strömungskanal eintreten und dadurch nicht über die Entlüftungseinrichtung entweichen.

Bevorzugt wird auch eine Entlüftungseinrichtung, die sich dadurch auszeichnet, dass das Verschließelement in einer dritten Funktionsstellung so angeordnet ist, dass es sowohl den Einlass als auch den Auslass, und somit den Strömungskanal, freigibt. In dieser Funktionsstellung kann der Hydraulikzylinder beziehungsweise Aktuatorraum entlüftet werden, weil das im Wege der Entlüftung auszutreibende Medium durch den Einlass in die Entlüftungseinrichtung eintreten und diese durch den Auslass wieder verlassen kann.

Bevorzugt wird auch eine Entlüftungseinrichtung, die sich durch ein das Verschließelement in seine erste Funktionsstellung drängendes und vorzugsweise in dieser mit einer Vorspannkraft beaufschlagendes Vorspannelement auszeichnet. Durch das Vorspannelement wird das Verschließelement sicher in seiner ersten Funktionsstellung gegen den Einlass gedrängt, sodass dieser dicht verschlossen ist. Eine besonders dichte Anlage des Verschließelements am Einlass ergibt sich, wenn das Vorspannelement das Verschließelement auch in dessen erster Funktionsstellung noch mit einer Vorspannkraft beaufschlagt, sodass es dauerhaft mit einer gewissen Kraft gegen den Einlass gedrückt wird.

Es wird auch eine Entlüftungseinrichtung bevorzugt, die sich dadurch auszeichnet, dass das Verschließelement gegen eine von dem Vorspannelement in es eingeleitete Kraft von seiner ersten in seine dritte Funktionsstellung verlagerbar ist, wenn ein erster Druck am Einlass herrscht. Der erste Druck bewirkt eine Kraft auf das Verschließelement, die entgegengesetzt zu der durch das Vorspannelement auf es ausgeübten Kraft ausgerichtet ist. Letztlich stellt sich ein Kräftegleichgewicht ein, bei dem die durch den ersten Druck auf das Verschließelement ausgeübte Kraft und die durch das Vorspannelement auf es ausgeübte Kraft gleich groß sind, wobei das Vorspannelement um einen gewissen Betrag komprimiert wird, sodass das Verschließelement seiner dritten Funktionsstellung angeordnet ist, in der sowohl der Einlass als auch der Auslass freigegeben sind.

Bevorzugt wird auch eine Entlüftungseinrichtung, die sich dadurch auszeichnet, dass das Verschließelement gegen eine von dem Vorspannelement in es eingeleitete Kraft von seiner dritten in seine zweite Funktionsstellung verlagerbar ist, wenn ein zweiter Druck am Einlass herrscht. Vorzugsweise ist der zweite Druck größer als der erste Druck, sodass - vom Einlass her gesehen - eine größere Kraft auf das Verschließelement wirkt. Diese führt zu einer weiteren Kompression des Vorspannelements, wobei das Verschließelement gegen den Auslass, und damit in seine zweite Funktionsstellung gedrängt wird. Es verschließt dabei den Auslass dicht. In dieser zweiten Funktionsstellung des Verschließelements kann also beispielsweise Hydraulikmedium durch den Einlass in die Entlüftungseinrichtung eintreten, jedoch nicht durch den Auslass ausströmen, weil dieser durch das Verschließelement dicht verschlossen wird.

Es wird auch eine Entlüftungseinrichtung bevorzugt, die sich dadurch auszeichnet, dass der Einlass einen Ventilsitz aufweist, an dem das Verschließelement in seiner ersten Funktionsstellung dichtend anliegt. Auf diese Weise kann eine besonders dichte Anlage des Verschließelements am Einlass im Bereich des Ventilsitzes bewirkt werden, wenn das Verschließelement gegen den Ventilsitz gedrängt wird.

Auch wird eine Entlüftungseinrichtung bevorzugt, die sich dadurch auszeichnet, dass der Auslass einen Ventilsitz aufweist, an dem das Verschließelement in seiner zweiten Funktionsstellung dichtend anliegt. In diesem Fall ist eine besonders dichte Anlage des Verschließelements am Auslass möglich, wenn dieses gegen den Ventilsitz gedrängt wird.

Bevorzugt wird auch noch eine Entlüftungseinrichtung, die sich dadurch auszeichnet, dass das Verschließelement als Kugel, ballig, konisch oder zylindrisch ausgebildet ist. Die Kugelform ist dabei eine besonders einfache Geometrie für das Verschließelement. Dieses kann jedoch auch andere Formen aufweisen, wobei es vorzugsweise zumindest einen balligen, konischen oder zylindrischen Bereich aufweist, der gegen den Einlass und/oder den Auslass drängbar ist, um dort eine dichte Anlage, insbesondere an einem Ventilsitz zu ermöglichen.

Bevorzugt wird auch eine Entlüftungseinrichtung, die sich dadurch auszeichnet, dass das Verschließelement als Stempel ausgebildet ist. Dabei kann der ballige, konische oder zylindrische Bereich mit einem zweiten Bereich verbunden sein, der vorzugsweise zylindrisch ausgebildet ist und einen kleineren Durchmesser als der ballige, konische oder zylindrische erste Bereich aufweist, sodass das Verschließelement insgesamt eine Stempelform aufweist. Das Vorspannelement kann dann bevorzugt an dem zweiten Bereich kleineren Durchmessers beziehungsweise an einer in dem Übergangsbereich zwischen dem Bereich kleineren und dem Bereich größeren Durchmessers ausgebildeten Schulter angreifen und dabei bevorzugt den Bereich kleineren Durchmessers umgreifen.

Schließlich wird noch eine Entlüftungseinrichtung bevorzugt, die sich dadurch auszeichnet, dass das Vorspannelement als Federelement, vorzugsweise als Schraubenfeder ausgebildet ist. Hierbei ergibt sich eine besonders einfache Realisierung eines Vorspannelements. Eine Schraubenfeder kann sich auf besonders einfache Weise an dem Verschließelement abstützen, insbesondere wenn dieses Stempelform aufweist. In diesem Fall kann die Schraubenfeder sich an der im Übergangsbereich zwischen dem Bereich größeren und dem Bereich kleineren Durchmessers gebildeten Schulter abstützen, während sie den Bereich kleineren Durchmessers umgreift.

Die Erfindung wird im Folgenden anhand der Zeichnung näher erläutert.

Es zeigen:
- Figur 1: ein Ausführungsbeispiel der Entlüftungseinrichtung mit einem Verschließelement in seiner ersten Funktionsstellung;
- Figur 2: das Ausführungsbeispiel gemäß Figur 1 mit dem Verschließelement in seiner dritten Funktionsstellung;
- Figur 3: das Ausführungsbeispiel gemäß Figur 1 mit dem Verschließelement in seiner zweiten Funktionsstellung und
- Figur 4: ein Diagramm, in dem ein durch eine Kupplung übertragenes Drehmoment gegen einen im Aktuatorraum herrschenden Druck aufgetragen ist.

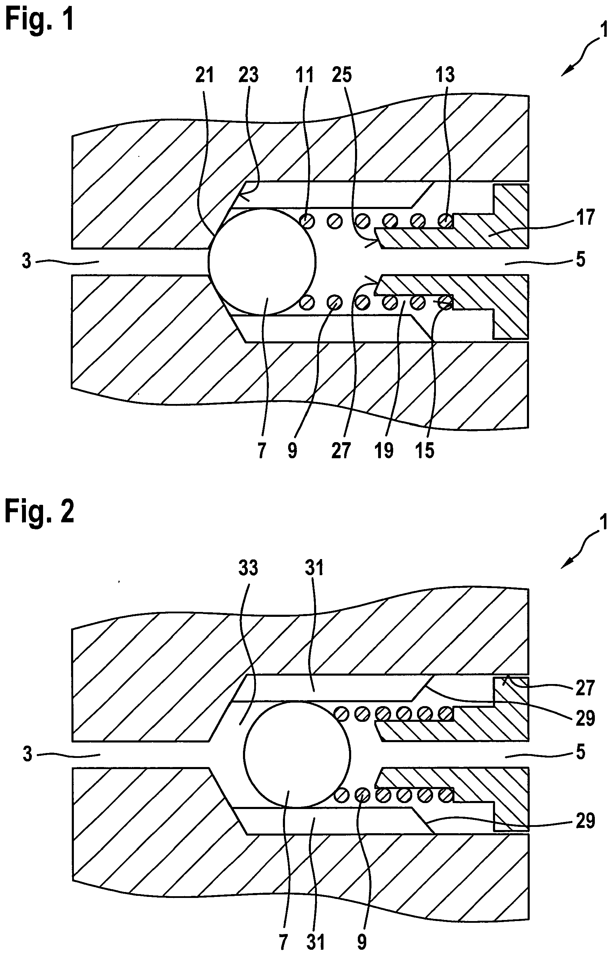

Figur 1 zeigt eine Entlüftungseinrichtung 1. Diese dient zur Entlüftung eines Aktuatorraums eines hydraulischen Betätigungskreises, insbesondere eines Hydraulikzylinders, der bevorzugt in Zusammenhang mit einem Doppelkupplungsgetriebe, ganz besonders bevorzugt in Zusammenhang mit der Kupplung eines Doppelkupplungsgetriebes eingesetzt wird. Bevorzugt kann die Entlüftungseinrichtung auch in Zusammenhang mit einem Gangstellerzylinder eines Doppelkupplungsgetriebes eingesetzt werden. Die Entlüftungseinrichtung 1 ermöglicht die Entlüftung des hydraulischen Aktuatorraums, also des Hydraulikzylinders, sodass eine stabile hydraulische Strecke zur Verfügung steht. Sie wird durch einen Strömungskanal durchsetzt, der einen Einlass 3 und einen Auslass 5 aufweist. Der Einlass 3 steht vorzugsweise in Fluidverbindung mit dem Bereich des hydraulischen Betätigungskreises, in dem ein Druck zur Betätigung des Hydraulikzylinders aufgebaut wird. Der Auslass 5 steht bevorzugt in Fluidverbindung zu einem Vorratstank des Hydraulikmediums, der vorzugsweise drucklos ist.

Es ist ein Verschließelement 7 vorgesehen, das in einer ersten, hier dargestellten Funktionsstellung den Auslass 5 freigibt. Zugleich verschließt das Verschließelement 7 in dieser Funktionsstellung den Einlass 3. Bei dem hier dargestellten Ausführungsbeispiel wird das Verschließelement durch ein Vorspannelement 9 in seine erste Funktionsstellung gedrängt. Das Vorspannelement 9 ist dabei bevorzugt als Federelement, vorzugsweise als Schraubenfeder ausgebildet. Es stützt sich bevorzugt mit einer ersten Stirnseite 11 an dem Verschließelement 7 ab, wobei es sich vorzugsweise mit einer zweiten Stirnseite 13 an einer Anschlagsfläche 15 abstützt, die bevorzugt im Bereich einer in eine den Auslass 5 umgebende Wandung 17 eingebrachten Ausnehmung 19 angeordnet ist. Die Ausnehmung 19 ist vorzugsweise als Ringnut ausgebildet.

Bei dem dargestellten Ausführungsbeispiel ist das Verschließelement 7 als Kugel ausgebildet. Bei anderen Ausführungsbeispielen kann es ballig, konisch oder zylindrisch ausgebildet sein. Wesentlich ist, dass das Verschließelement 7 in seiner ersten Funktionsstellung den Einlass 3 und in seiner zweiten Funktionsstellung den Auslass 5 sicher verschließt. Bei einem anderen Ausführungsbeispiel kann das Verschließelement 7 auch stempelförmig ausgebildet sein. Es kann dabei einen sich vorzugsweise in Richtung des Auslasses 5 erstreckenden Bereich aufweisen, der bevorzugt einen kleineren Durchmesser aufweist als der Bereich, der dichtend am Einlass 3 anliegt, wenn sich das Verschließelement 7 in seiner ersten Funktionsstellung befindet. In diesem Fall kann das Vorspannelement 9 sich an einer Schulter anstützen, die im Übergangsbereich des Bereichs größeren Durchmessers zum Bereich kleineren Durchmessers gebildet ist. Besonders bevorzugt umgreift dann das Vorspannelement 9 den Bereich kleineren Durchmessers. Auch dieser kann einen dem Auslass 5 zugewandten balligen, konischen oder zylindrischen Bereich umfassen, der in der zweiten Funktionsstellung des Verschließelements 7 dem Auslass 5 dichtend anliegt. Bevorzugt ist das Vorspannelement 9 auch dann vorgespannt, beispielsweise zumindest leicht komprimiert, wenn sich das Verschließelement 7 in seiner ersten Funktionsstellung befindet. Es wird dann auch in dieser mit einer Vorspannkraft beaufschlagt und sicher und dichtend gegen den Einlass 3 gedrückt.

Bevorzugt weist der Einlass 3 einen Ventilsitz 21 auf, der beim hier dargestellten Ausführungsbeispiel eine konische Fläche 23 umfasst. Das Verschließelement 7 wird dann in seiner ersten Funktionsstellung gegen den Ventilsitz 21, hier also gegen die konische Fläche 23 gedrängt, wobei sich eine besonders dichte Anlage ergibt. Bevorzugt weist auch der Auslass 5 einen Ventilsitz 25 auf. Dieser ist bei dem dargestellten Ausführungsbeispiel ebenfalls als konische Fläche 27 ausgebildet. Auf diese Weise ergibt sich auch eine besonders dichte Anlage, wenn das Verschließelement 7 in seiner zweiten Funktionsstellung dichtend gegen den Auslass 5 gedrängt wird.

Figur 2 zeigt das Ausführungsbeispiel einer Entlüftungseinrichtung 1 gemäß Figur 1, wobei das Verschließelement 7 hier in seiner dritten Funktionsstellung dargestellt ist. Gleiche und funktionsgleiche Elemente sind mit gleichen Bezugszeichen versehen, sodass insofern auf die vorangegangene Beschreibung verwiesen wird. Herrscht am Einlass 3 ein Druck, aufgrund dessen eine Kraft in das Verschließelement 7 eingeleitet wird, die größer ist als die durch das Vorspannelement 9 in es eingeleitete Kraft, verlagert sich das Verschließelement 7 in Figur 2 nach rechts. Dadurch wird der Einlass 3 freigegeben. Das Verschließelement 7 ist vorzugsweise in einer Bohrung 27 angeordnet, die radiale Vorsprünge 29 beziehungsweise in Axialrichtung verlaufende Nuten 31 aufweist. Wird das Verschließelement 7 in der Bohrung 27 verlagert, wird es durch die Vorsprünge 29 geführt, sodass eine Verlagerung vorzugsweise ausschließlich in axialer Richtung der Bohrung 27 erfolgt und es nicht in radialer Richtung ausweichen kann.

In der dritten Funktionsstellung des Verschließelements 7 stellt sich ein Kräftegleichgewicht zwischen dem am Einlass 3 herrschenden und auf das Verschließelement 7 wirkenden Druck einerseits und der auf das Verschließelement 7 durch das Vorspannelement 9 ausgeübten Kraft andererseits ein. Dadurch nimmt das Verschließelement 7 quasi eine Mittelstellung ein, bei der sowohl der Einlass 3 als auch der Auslass 5 freigegeben sind. Durch den Einlass 3 einströmendes Medium gelangt so in einen Innenraum 33 der Entlüftungseinrichtung 1. Dort kann es durch die Nuten 31 an dem Verschließelement 7 vorbeiströmen und aus dem Innenraum 33 über den Auslass 5 ausströmen. Es ist offensichtlich, dass es einen bestimmten Druckbereich gibt, innerhalb dessen das Verschließelement 7 in seiner dritten Funktionsstellung angeordnet ist. Bei einem relativ kleinen Druck innerhalb dieses Bereichs ist der Einlass 3 schon zum Innenraum 33 hin freigegeben, das Verschließelement 7 befindet sich aber in Figur 2 noch relativ weit links, sodass das Vorspannelement 9 nur wenig komprimiert ist. Steigt der Druck, stellt sich ein neues Gleichgewicht zwischen der Druckkraft einerseits und der durch das Vorspannelement 9 in das Verschließelement 7 eingeleiteten Kraft andererseits ein, wodurch sich dessen Position nach rechts verlagert. Am oberen Ende des genannten Druckbereichs ist das Verschließelement 7 relativ weit rechts in Figur 2 angeordnet, sodass das Vorspannelement 9 vergleichsweise stark komprimiert ist. Gleichwohl ist der Auslass 5 noch freigegeben. In dem hier angesprochenen Druckbereich wird vorzugsweise der Hydraulikzylinder, dem die Entlüftungseinrichtung 1 zugeordnet ist, entlüftet, sodass dort vorhandenes Gas oder Luft durch die Entlüftungseinrichtung 1 entweichen kann, indem sie den dort aus dem Einlass 3, dem Innenraum 33, den Nuten 31 und dem Auslass 5 gebildeten Strömungskanal passiert.

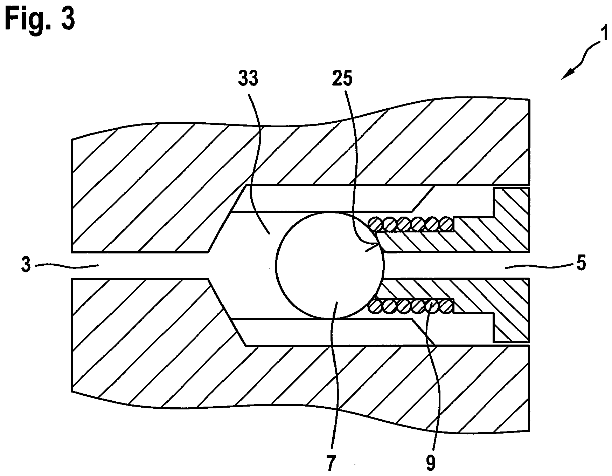

Figur 3 zeigt das Ausführungsbeispiel einer Entlüftungseinrichtung 1 gemäß Figur 1, wobei das Verschließelement 7 in seiner zweiten Funktionsstellung angeordnet ist. Gleiche und funktionsgleiche Elemente sind mit gleichen Bezugszeichen versehen, sodass insofern auf die vorangegangene Beschreibung verwiesen wird. Steigt der am Einlass 3 herrschende Druck über den in Zusammenhang mit Figur 2 beschriebenen Bereich, verlagert sich das Verschließelement 7 entgegen der Kraft des Vorspannelements 9, wie in Figur 3 dargestellt, ganz nach rechts, sodass es gegen den Auslass 5 gedrängt wird. Dieser wird dadurch dicht verschlossen. Steigt der am Einlass 3 herrschende Druck weiter, wird das Verschließelement 7 umso fester gegen den Auslass 5, vorzugsweise gegen den dort angeordneten Ventilsitz 25 gedrängt, sodass die Dichtwirkung steigt. Vorzugsweise gelangt das Verschließelement 7 erstmals in seine zweite Funktionsstellung, wenn ein zweiter Druck am Einlass 3 herrscht. Dieser ist höher als der in Zusammenhang mit Figur 2 diskutierte erste Druck. In dem in Zusammenhang mit Figur 3 angesprochenen Druckbereich, in dem der am Einlass herrschende Druck gleich dem zweiten Druck oder größer ist, ist der Entlüftungsvorgang vorzugsweise abgeschlossen, und der Hydraulikzylinder wird mit Hydraulikmedium beaufschlagt. Dieses kann durch den freigegebenen Einlass 3 in die Entlüftungseinrichtung 1 beziehungsweise deren Innenraum 33 eintreten, jedoch nicht mehr über den Auslass 5 ausströmen, weil dieser durch das Verschließelement 7 dicht verschlossen ist. Es kann also in diesem Druckbereich kein Verlust von Hydraulikmedium über den Auslass 5 auftreten.

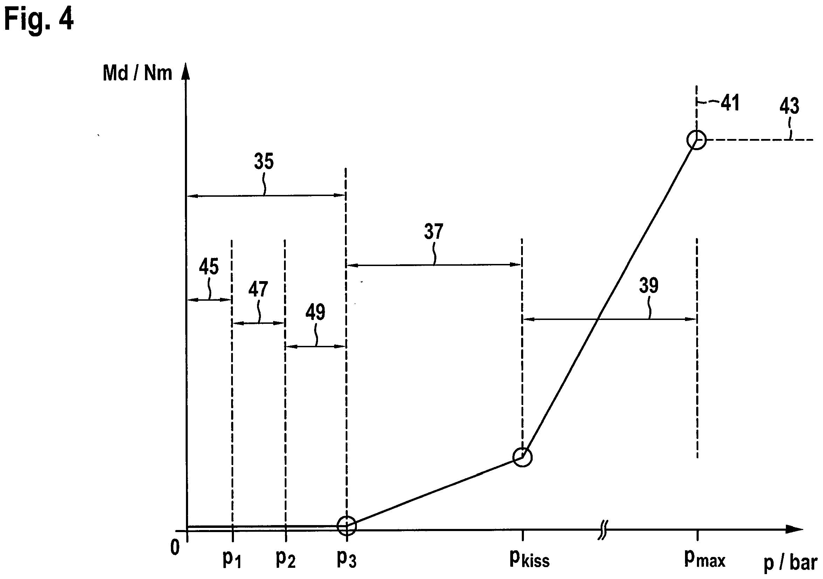

Figur 4 zeigt ein Diagramm, in dem ein durch die Kupplung eines Doppelkupplungsgetriebes übertragbares Drehmoment gegen einen Druck aufgetragen ist, der auf einen die Kupplung betätigenden Hydraulikzylinder einwirkt. Die angegebenen Druckbereiche bezeichnen bevorzugte Werte beziehungsweise Intervalle. Bei anderen Ausführungsbeispielen der Erfindung kann von diesen Werten abgewichen werden.

In einem ersten, mit einem Doppelpfeil 35 gekennzeichneten Druckbereich bleibt der Kolben des Hydraulikzylinders in Ruhelage, weil die durch den anliegenden Druck in ihn eingeleitete Kraft nicht ausreicht, die auf den Kolben wirkenden Reibungskräfte, beispielsweise im Bereich seiner an der Zylinderwandung anliegenden Kolbendichtung, zu überwinden. In einem zweiten, mit einem Doppelpfeil 37 gekennzeichneten Bereich bewegt sich der Kolben und bewirkt ein Schließen der Kupplung. In diesem Druckbereich wird bereits ein gewisses, mit zunehmendem Druck steigendes Drehmoment von der Kupplung übertragen. In einem dritten, mit einem Doppelpfeil 39 gekennzeichneten Bereich hat der Kolben im Wesentlichen seinen Fahrweg zurückgelegt, die Kupplung ist also im Wesentlichen geschlossen, wobei der steigende Druck hier vollständig zum Aufbau von Drehmoment genutzt wird, welches durch die Kupplung übertragen wird. Bei dem hier dargestellten Ausführungsbeispiel beginnt der Kolben seine Bewegung beziehungsweise Kolbenfahrt bei einem Druck von ungefähr p₃ (in diesem Ausführungsbeispiel etwa 0,8 bar) und gelangt bei einem Druck von ungefähr pₖᵢₛₛ (hier in etwa 2,0 bar) im Wesentlichen in seine Endposition. In dem Bereich zwischen ungefähr pₖᵢₛₛ und einem Druck von etwa pₘₐₓ (ungefähr 20,0 bar) kann Drehmoment aufgebaut werden, wobei der maximale Druck des Hydrauliksystems bei ungefähr pₘₐₓ liegt. Bei diesem maximalen Druck wird das maximal von der Kupplung übertragbare Drehmoment aufgebaut. Der maximale Druck ist hier durch eine parallel zur Drehmomentachse verlaufende Linie 41 dargestellt. Das maximale Drehmoment ist durch eine parallel zur Druckachse verlaufende Linie 43 gekennzeichnet.

Mithilfe der schaltbaren Entlüftungseinrichtung soll der Hydraulikzylinder vorzugsweise in einem Druckbereich entlüftet werden, in dem keine Betätigung desselben erfolgt. Hierfür steht der erste Bereich 35 zur Verfügung, der bei dem dargestellten Ausführungsbeispiel das Druckintervall von 0,0 bar bis ungefähr p₃ umfasst. Das Vorspannelement 9 ist bevorzugt so ausgelegt, dass ein hier mit einem Doppelpfeil 45 gekennzeichneter Druckbereich von 0,0 bar bis zu einem ersten Druck p₁ existiert, in dem das Verschließelement 7 in seiner ersten Funktionsstellung angeordnet ist. In diesem Druckbereich kann kein Medium durch den Einlass 3 in die Entlüftungseinrichtung 1 eintreten, es tritt also keine Leckage und insbesondere kein Verlust von Hydraulikmedium auf.

Mit Erreichen des ersten Drucks p₁, der beim dargestellten Ausführungsbeispiel einen Wert von ungefähr 0,3 bar hat, wird das Verschließelement 7 von seiner ersten in seine dritte Funktionsstellung verlagert, wodurch der Einlass 3 freigegeben wird. Gleichzeitig ist der Auslass 5 freigegeben. Wie bereits beschrieben, umfasst die dritte Funktionsstellung vorzugsweise einen Bereich von möglichen Anordnungen des Verschließelements 7, wobei dieses durch einen steigenden, am Einlass 3 herrschenden Druck immer weiter in Richtung auf den Auslass 5 hin gegen die Vorspannkraft des Vorspannelements 9 verlagert wird. Bei gegebenem Druck stellt sich ein Kräftegleichgewicht ein, sodass das Verschließelement 7 in einer Stellung verharrt, die dem herrschenden Kräftegleichgewicht entspricht. Der Druckbereich, welcher der dritten Funktionsstellung des Verschließelements 7 entspricht, ist in Figur 4 mit einem Doppelpfeil 47 gekennzeichnet. Er umfasst hier vorzugsweise das Intervall von ungefähr p₁ bis ungefähr p₂ (hier etwa 0,5 bar). In diesem Druckintervall sind sowohl der Einlass 3 als auch der Auslass 5 der Entlüftungseinrichtung 1 freigegeben, sodass der Hydraulikzylinder entlüftet werden kann.

Bei Erreichen eines zweiten Drucks p₂, der bei dem dargestellten Ausführungsbeispiel ungefähr 0,5 bar entspricht, wird das Verschließelement 7 entgegen der Kraft des Vorspannelements 9 in seine zweite Funktionsstellung verlagert und verschließt den Auslass 5 dichtend. In dieser Funktionsstellung und damit ab dem Erreichen des zweiten Drucks p₂ kann kein Medium mehr durch den Auslass 5 der Entlüftungseinrichtung 1 austreten, sodass hier keine Leckage auftreten kann.

Es zeigt sich, dass bei dem dargestellten Ausführungsbeispiel ein mit einem Doppelpfeil 49 gekennzeichneter Druckbereich existiert, in dem das Verschließelement 7 bereits in seiner zweiten Funktionsstellung angeordnet ist, also den Auslass 5 dicht verschließt, während der Kolben des Hydraulikzylinders sich noch in Ruhelage befindet. Dieser Bereich umfasst hier vorzugsweise das Druckintervall von ungefähr p₂ bis ungefähr p₃. Hierdurch wird sichergestellt, dass eine Entlüftung des Hydraulikzylinders abgeschlossen beziehungsweise die Entlüftungseinrichtung 1 dicht geschlossen ist, bevor der Kolben seine Kolbenfahrt aufnimmt. Dem Kolben steht dadurch eine stabile hydraulische Strecke zur Verfügung, bevor er tatsächlich aktiviert wird.

Es zeigt sich also, dass mithilfe der schaltbaren Entlüftungseinrichtung 1 ein Hydraulikzylinder in einem definierten Druckbereich, nämlich dem hier mit dem Doppelpfeil 47 gekennzeichneten Bereich, entlüftet werden kann, wobei die Entlüftungseinrichtung 1 in allen anderen Druckbereichen den Hydraulikkreis dicht verschließt.

Hierdurch kann in einem gegebenen Druckfenster - hier vorzugsweise zwischen p₁ und p₂ (also 0,3 und 0,5 bar) - eine aktive Entlüftung des Hydraulikzylinders bewirkt werden, wobei in diesem Druckbereich keine Bewegung des Hydraulikzylinders stattfindet, sodass die Entlüftung quasi im funktionalen Hintergrund erfolgt. Sowohl bei drucklosem Hydraulikzylinder als auch bei aktivem, mit Betätigungsdruck beaufschlagtem Hydraulikzylinder kann keine Leckage und damit kein Verlust von Hydraulikmedium auftreten.

Vorzugsweise ist eine Steuerungseinrichtung vorgesehen, die bedarfsgerecht den Hydraulikzylinder entlüftet, indem aktiv der in dem Hydraulikkreis herrschende Druck in den zur Entlüftung vorgesehenen Druckbereich gesteuert wird. Der Entlüftungsbedarf kann durch Versuche ermittelt und durch Applikation in der Steuerungseinrichtung abgelegt werden. Eine Entlüftung kann dann gezielt erfolgen, bevor eine Aktivierung des Hydraulikzylinders durchgeführt wird. Insgesamt kann das Zeitfenster, innerhalb dessen die Entlüftungseinrichtung einen Strömungspfad zwischen dem Auslass 3 und dem Einlass 5 freigibt, auf wenige Millisekunden begrenzt werden, wodurch eine Leckage und damit insbesondere ein Verlust von Hydraulikmedium minimiert wird. Es kann also das Verschließelement 7 steuernd und/oder regelnd in der dritten Funktionsstellung gehalten beziehungsweise der Strömungspfad zwischen dem Auslass 3 und dem Einlass 5 gezielt nach Verstreichen einer bestimmten Zeitspanne (dem Zeitfenster) unterbrochen werden. Dabei erfolgt das Halten des Verschließelements 7 in der dritten Funktionsstellung, also das Freigeben des Strömungspfads beispielsweise in Abhängigkeit eines bestimmten, eingestellten Drucks.

### BEZUGSZEICHENLISTE

- 1: Entlüftungseinrichtung
- 3: Einlass
- 5: Auslass
- 7: Verschließelement
- 9: Vorspannelement
- 11: erste Stirnseite
- 13: zweite Stirnseite
- 15: Anschlagsfläche
- 17: Wandung
- 19: Ausnehmung
- 21: Ventilsitz
- 23: konische Fläche
- 25: Ventilsitz
- 27: konische Fläche
- 29: radiale Vorsprünge
- 31: Nuten
- 33: Innenraum
- 35: Doppelpfeil
- 37: Doppelpfeil
- 39: Doppelpfeil
- 41: Linie
- 43: Linie
- 45: Doppelpfeil
- 47: Doppelpfeil
- 49: Doppelpfeil

## Patentansprüche

1. Entlüftungseinrichtung (1) für einen Hydraulikzylinder eines Doppelkupplungsgetriebes, mit einem einen Einlass (3) und einen Auslass (5) aufweisenden, die Entlüftungseinrichtung (1) durchsetzenden Strömungskanal, und einem den Auslass (5) in wenigstens einer ersten Funktionsstellung freigebendes und in einer zweiten Funktionsstellung verschließendes Verschließelement (7), wobei das Verschließelement (7) in seiner ersten Funktionsstellung so angeordnet ist, dass es den Einlass (3) verschließt, und in einer dritten Funktionsstellung so angeordnet ist, dass es sowohl den Einlass (3) als auch den Auslass (5) und somit den Strömungskanal freigibt, wobei ein das Verschließelement (7) in seine erste Funktionsstellung drängendes und in dieser mit einer Vorspannkraft beaufschlagendes Vorspannelement (9) vorgesehen ist, wobei das Verschließelement (7) gegen eine von dem Vorspannelement (9) in es eingeleitete Kraft von seiner ersten in seine dritte Funktionsstellung verlagert wird, wenn ein erster Druck am Einlass (3) herrscht, **dadurch gekennzeichnet, dass** das Verschließelement (7) gegen eine von dem Vorspannelement (9) in es eingeleitete Kraft von seiner dritten in seine zweite Funktionsstellung verlagert wird, wenn ein zweiter Druck am Einlass (3) herrscht, und wobei die Entlüftungseinrichtung (1) derart ausgebildet ist, dass ein Kolben des Hydraulikzylinders erst bei einem dritten Druck verlagert wird, der größer als der zweite Druck ist.

2. Entlüftungseinrichtung nach Anspruch 1, **dadurch gekennzeichnet, dass** der Einlass (3) einen Ventilsitz (21) aufweist, an dem das Verschließelement (7) in seiner ersten Funktionsstellung dichtend anliegt.

3. Entlüftungseinrichtung nach einem der vorhergehenden Ansprüche, **dadurch gekennzeichnet, dass** der Auslass (5) einen Ventilsitz (25) aufweist, an dem das Verschließelement (7) in seiner zweiten Funktionsstellung dichtend anliegt.

4. Entlüftungseinrichtung nach einem der vorhergehenden Ansprüche, **dadurch gekennzeichnet, dass** das Verschließelement (7) als Kugel, ballig, konisch oder zylindrisch ausgebildet ist.

5. Entlüftungseinrichtung nach einem der vorhergehenden Ansprüche, **dadurch gekennzeichnet, dass** das Verschließelement (7) als Stempel ausgebildet ist.

6. Entlüftungseinrichtung nach einem der vorhergehenden Ansprüche 3 bis 9, **dadurch gekennzeichnet, dass** das Vorspannelement (9) als Federelement, vorzugsweise als Schraubenfeder ausgebildet ist.

7. Hydraulikzylinder eines Doppelkupplungsgetriebes, mit einer Entlüftungseinrichtung (1) nach Anspruch 1.

## Claims

1. Venting device (1) for a hydraulic cylinder of a dual clutch transmission, with a flow channel comprising an inlet (3) and an outlet (5) and passing through the venting device (1), and with a closing element (7) that releases the outlet (5) in at least a first functional position and closes said outlet in a second functional position, wherein the closing element (7) is arranged in its first functional position in such a way that it closes the inlet (3), and is arranged in a third functional position in such a way that it releases both the inlet (3) and also the outlet (5) and thus the flow channel, wherein a preloading element (9) is provided that pushes the closing element (7) into its first functional position and subjects it to a preloading force in this first functional position, wherein the closing element (7) is displaceable from its first into its third functional position against a force that is introduced into it by the preloading element (9) when a first pressure prevails at the inlet (3), **characterised in that** the closing element (7) is displaceable from its third into its second functional position against a force that is introduced into it by the preloading element (9) when a second pressure prevails at the inlet (3), and wherein the venting device (1) is configured in such a way that a piston of the hydraulic cylinder is displaceable only when a third pressure prevails that is larger than the second pressure.

2. Venting device according to claim 1, **characterised in that** the inlet (3) comprises a valve seat (21) against which the closing element (7) rests sealingly in its first functional position.

3. Venting device according to any of the preceding claims, **characterised in that** the outlet (5) comprises a valve seat (25) against which the closing element (7) rests sealingly in its second functional position.

4. Venting device according to any of the preceding claims, **characterised in that** the closing element (7) is formed as a ball, spherically, conically, or cylindrically.

5. Venting device according to any of the preceding claims, **characterised in that** the closing element (7) is formed as a piston.

6. Venting device according to any of the preceding claims 3 to 9, **characterised in that** the preloading element (9) is formed as a spring element, preferably as a helical spring.

7. Hydraulic cylinder of a dual clutch transmission, with a venting device (1) according to claim 1.

## Revendications

1. Dispositif de purge (1) pour un cylindre hydraulique d'une transmission à double embrayage, avec un canal d'écoulement comportant une entrée (3) et une sortie (5) et traversant le dispositif de purge (1) et avec un élément de fermeture (7) libérant la sortie (5) dans au moins une première position fonctionnelle et la fermant dans une deuxième position fonctionnelle, dans lequel l'élément de fermeture (7) est disposé dans sa première position fonctionnelle de telle sorte qu'il ferme l'entrée (3) et il est disposé dans une troisième position fonctionnelle de telle sorte qu'il libère aussi bien l'entrée (3) que la sortie (5) et donc le canal d'écoulement, dans lequel il est prévu un élément de précontrainte (9) qui pousse l'élément de fermeture (7) dans sa première position fonctionnelle et qui le soumet à une force de précontrainte dans celle-ci et dans lequel l'élément de fermeture (7) est déplacé de sa première à sa troisième position fonctionnelle, contre une force exercée par l'élément de précontrainte (9), lorsqu'une première pression règne au niveau de l'entrée (3), **caractérisé en ce que** l'élément de fermeture (7) est déplacé de sa troisième à sa deuxième position fonctionnelle, contre une force exercée par l'élément de précontrainte (9), lorsqu'une deuxième pression règne au niveau de l'entrée (3), le dispositif de purge (1) étant conçu de telle sorte qu'un piston du cylindre hydraulique n'est déplacé qu'en présence d'une troisième pression qui est supérieure à la deuxième pression.

2. Dispositif de purge selon la revendication 1, **caractérisé en ce que** l'entrée (3) comporte un siège de soupape (21) contre lequel l'élément de fermeture (7) s'appuie de manière étanche dans sa première position fonctionnelle.

3. Dispositif de purge selon l'une des revendications précédentes, **caractérisé en ce que** la sortie (5) comporte un siège de soupape (25) contre lequel l'élément de fermeture (7) s'appuie de manière étanche dans sa deuxième position fonctionnelle.

4. Dispositif de purge selon l'une des revendications précédentes, **caractérisé en ce que** l'élément de fermeture (7) est réalisé sphérique, bombé, conique ou cylindrique.

5. Dispositif de purge selon l'une des revendications précédentes, **caractérisé en ce que** l'élément de fermeture (7) est réalisé sous forme de tampon.

6. Dispositif de purge selon l'une des revendications précédentes 3 à 9, **caractérisé en ce que** l'élément de précontrainte (9) est réalisé sous forme de ressort, de préférence sous forme de ressort hélicoïdal.

7. Cylindre hydraulique d'une transmission à double embrayage, avec un dispositif de purge (1) selon la revendication 1.
